(19) Europäisches Patentamt
European Patent Office
Office européen des brevets

(11) **EP 3 722 906 A1**

(12) **EUROPEAN PATENT APPLICATION**
published in accordance with Art. 153(4) EPC

(43) Date of publication:
**14.10.2020 Bulletin 2020/42**

(21) Application number: **18897378.8**

(22) Date of filing: **12.11.2018**

(51) Int Cl.:
**G05D 1/02** (2020.01)

(86) International application number:
**PCT/CN2018/114999**

(87) International publication number:
**WO 2019/128496 (04.07.2019 Gazette 2019/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.12.2017 CN 201711471549**

(71) Applicant: **Beijing Sankuai Online Technology Co., Ltd**
**Beijing 100080 (CN)**

(72) Inventor: **LIU, Yuda**
**Beijing 100080 (CN)**

(74) Representative: **Kraus & Weisert**
**Patentanwälte PartGmbB**
**Thomas-Wimmer-Ring 15**
**80539 München (DE)**

(54) **DEVICE MOTION CONTROL**

(57) Disclosed are a method and an apparatus for controlling device motion and an electronic device. The method includes: detecting position information of an object within a target range around a target device relative to the target device (101); acquiring image information collected by the target device (102); determining initial data based on the position information, the initial data including a plurality of sets of available values of a motion parameter (103); and selecting, from the plurality of sets of available values based on the image information, a target value of a current motion parameter for controlling motion of the target device (104). Therefore, the target device can be adjusted in real time according to a surrounding environment.

```
┌─────────────────────────────────────────────────────────────┐
│ Detect position information of an object within a target      │─ 101
│ range around a target device relative to the target device    │
└─────────────────────────────────────────────────────────────┘
                              │
                              ▼
┌─────────────────────────────────────────────────────────────┐
│ Acquire image information collected by the target device      │─ 102
└─────────────────────────────────────────────────────────────┘
                              │
                              ▼
┌─────────────────────────────────────────────────────────────┐
│ Determine initial data based on the position information, the  │─ 103
│ initial data including a plurality of sets of available        │
│ values of a motion parameter                                   │
└─────────────────────────────────────────────────────────────┘
                              │
                              ▼
┌─────────────────────────────────────────────────────────────┐
│ Select, from the plurality of sets of available values based   │─ 104
│ on the image information, a target value of the motion         │
│ parameter for currently controlling motion of the target device│
└─────────────────────────────────────────────────────────────┘
```

FIG. 1

EP 3 722 906 A1

## Description

### CROSS REFERENCE TO RELATED APPLICATIONS

This application claims priority to Chinese Patent Application No. 201711471549.9 filed on December 29, 2017 and entitled "METHOD AND APPARATUS FOR CONTROLLING DEVICE MOTION AND ELECTRONIC DEVICE", which is incorporated herein by reference in its entirety.

### TECHNICAL FIELD

This application relates to the field of driverless technologies, and in particular, to a method and an apparatus for controlling device motion and an electronic device.

### BACKGROUND

Generally, during automatic operation of a driverless device, such as a robot, an unmanned vehicle, or an unmanned aerial vehicle, motion of the driverless device needs to be adjusted according to a surrounding environment to avoid obstacles. Path planning is typically carried out according to distribution of obstacles around the driverless device to enable the driverless device to avoid obstacles, but the actual effect is poor.

### SUMMARY

To solve one of the above technical problems, this application provides a method and an apparatus for controlling device motion and an electronic device.

According to a first aspect of embodiments of this application, a method for controlling device motion is provided, including:

detecting position information of an object within a target range around a target device relative to the target device;
acquiring image information collected by the target device;
determining initial data based on the position information, the initial data including a plurality of sets of available values of a motion parameter; and
selecting, from the plurality of sets of available values based on the image information, a target value of the motion parameter for currently controlling motion of the target device.

Optionally, the initial data further includes weights for each of the plurality of sets of available values; and
the selecting, from the plurality of sets of available values based on the image information, a target value of the motion parameter for currently controlling motion of the target device includes:

modifying the weights for each of the plurality of sets of available values based on the image information; and
selecting the target value from the plurality of sets of available values according to the modified weights for each of the plurality of sets of available values.

Optionally, the modifying the weights for each of the plurality of sets of available values based on the image information includes:

determining modification data corresponding to each of the plurality of sets of available values based on the image information; and
modifying the weights for each of the plurality of sets of available values according to the modification data.

Optionally, the determining modification data corresponding to each of the plurality of sets of available values based on the image information includes:

inputting the image information into a pre-trained target convolutional neural network;
acquiring a target angle output by the target convolutional neural network; and
determining the modification data corresponding to each of the plurality of sets of available values based on the target angle.

Optionally, the determining the modification data corresponding to each of the plurality of sets of available values based on the target angle includes:

generating a normal distribution function with the target angle as an expected value; and
determining the modification data corresponding to each of the plurality of sets of available values according to the normal distribution function.

Optionally, the motion parameter includes a linear velocity and an angular velocity; and
the determining the modification data corresponding to each of the plurality of sets of available values according to the normal distribution function includes:

determining a product of a preset duration and an alternative angular velocity in each of the plurality of sets of available values as a plurality of values of a random variable x of the normal distribution function; and
acquiring a probability density value obtained by substituting each of the values into the normal distribution function as the modification data corresponding to each of the plurality of sets of available values.

According to a second aspect of embodiments of this application, an apparatus for controlling device motion is provided, including:

a detection module, configured to detect position information of an object within a target range around a target device relative to the target device;
an acquisition module, configured to acquire image information collected by the target device;
a determining module, configured to determine initial data based on the position information, the initial data including a plurality of sets of available values of a motion parameter; and
a selection module, configured to select, from the plurality of sets of available values based on the image information, a target value of the motion parameter for currently controlling motion of the target device.

Optionally, the initial data further includes weights for each of the plurality of sets of available values; and
the selection module includes:

a determining sub-module, configured to modify the weights for each of the plurality of sets of available values based on the image information; and
a selection sub-module, configured to select the target value from the plurality of sets of available values according to the modified weights for each of the plurality of sets of available values.

According to a third aspect of embodiments of this application, a computer-readable storage medium is provided. The storage medium stores a computer program, and the computer program, when executed by a processor, implements the method for controlling device motion according to the first aspect.

According to a fourth aspect of embodiments of this application, an electronic device is provided, including a storage medium, a processor, and a computer program stored in the storage medium and runnable on the processor, where when the processor executes the program, the method for controlling device motion according to the first aspect is implemented.

The technical solutions provided in the embodiments of this application may include the following beneficial effects:
According to the method and apparatus for controlling device motion provided in the embodiments of this application, position information of an object around a target device relative to the target device is detected; image information collected by the target device is acquired; initial data is determined based on the position information, the initial data including a plurality of sets of available values of a motion parameter; and a target value of a current motion parameter for controlling motion of the target device is selected from the plurality of sets of available values based on the image information. The alternative parameters obtained according to the position information can accurately make the target device avoid nearby objects around the target device, and the collected image information can accurately reflect distribution of distant obstacles around the target device. The target value is selected from the available values of the motion parameter in combination with the image information, so that obstacles close to and far from the target device can be fully considered, and the target device can be controlled to travel through a more optimized path, thereby improving the smoothness of the travel path and optimizing the path.

It should be understood that the general description above and the detailed description below are only illustrative and explanatory, and cannot limit this application.

## BRIEF DESCRIPTION OF THE DRAWINGS

The accompanying drawings herein are incorporated into the specification and constitute a part of the specification, illustrate the embodiments of this application, and are used for explaining the principles of this application together with the specification.

FIG. 1 illustrates a flowchart of a method for controlling device motion according to an exemplary embodiment of this application.
FIG. 2 illustrates a flowchart of another method for controlling device motion according to an exemplary embodiment of this application.
FIG. 3 illustrates a flowchart of another method for controlling device motion according to an exemplary embodiment of this application.
FIG. 4 illustrates a block diagram of an apparatus for controlling device motion according to an exemplary embodiment of this application.
FIG. 5 illustrates a block diagram of another apparatus for controlling device motion according to an exemplary embodiment of this application.
FIG. 6 illustrates a block diagram of another apparatus for controlling device motion according to an exemplary embodiment of this application.
FIG. 7 illustrates a block diagram of another apparatus for controlling device motion according to an exemplary embodiment of this application.
FIG. 8 illustrates a schematic structural diagram of an electronic device according to an exemplary embodiment of this application.

## DETAILED DESCRIPTION OF THE EMBODIMENTS

Exemplary embodiments are described in detail herein, and examples thereof are represented in the accompanying drawings. When the following description involves the accompanying drawings, unless otherwise indicated, the same numerals in different accompanying drawings represents the same or similar elements. Implementations described in the following exemplary embodiments do not represent all implementations in line with this application. Rather, they are only examples of apparatuses and methods as detailed in the appended claims and in line with some aspects of this application.

The terms used in this application are merely used for describing specific embodiments and are not intended to limit this application. Singular forms "a (an)," "said," and "the" used in this application and the appended claims are also intended to include plural forms, unless other meanings are clearly specified in the context. It should also be understood that the term "and/or" used herein refers to and includes any or all possible combinations of one or more associated listed items.

It should be understood that although the terms such as "first," "second," and "third" may be used to describe a variety of information in this application, the information should not be limited to the terms. The terms are used only to distinguish the same type of information from each other. For example, with departing from the scope of this application, first information may also be referred to as second information, and similarly, the second information may also be referred to as the first information. Depending on the context, the word "if" used herein may be interpreted as "when ...," "as ..." or "in response to determination. "

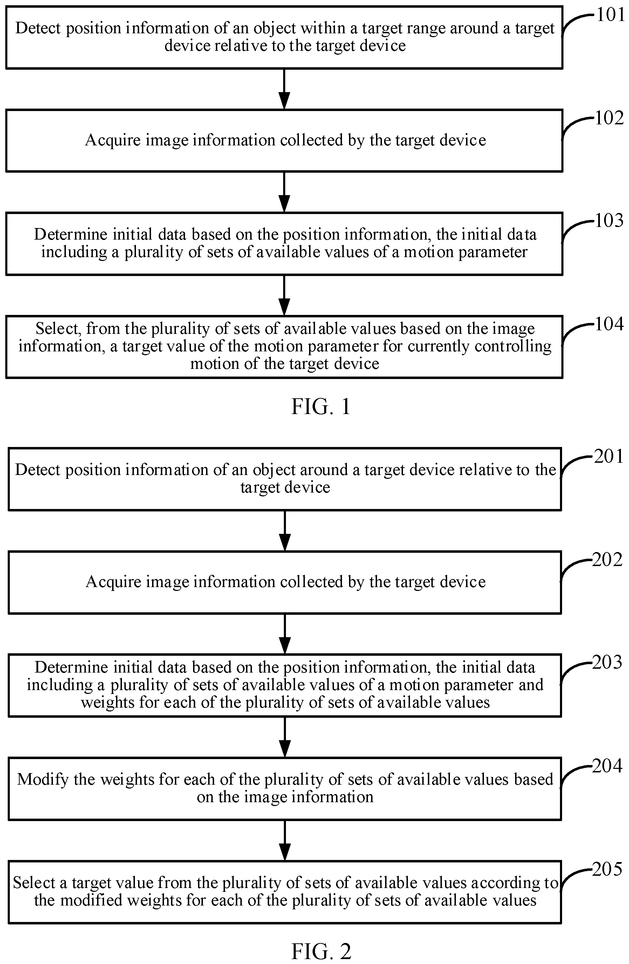

As shown in FIG. 1, FIG. 1 illustrates a flowchart of a method for controlling device motion according to an exemplary embodiment of this application. The method is applicable to an electronic device. In this embodiment, a person skilled in the art may understand that the electronic device is a driverless device, and may include, but not limited to, a navigation and positioning robot, an unmanned aerial vehicle, an unmanned vehicle, and the like. The method includes the following steps.

In step 101, position information of an object within a target range around a target device relative to the target device is detected.

In this embodiment, the target device is a driverless device, and may be a navigation and positioning robot, an unmanned aerial vehicle, an unmanned vehicle, or the like. The target device may be provided with a ranging sensor (for example, a laser ranging sensor or an infrared ranging sensor). The ranging sensor may be used to detect the position information of the object around the target device relative to the target device. The target range may be a range detectable by the ranging sensor. The position information may include distance information, azimuth information, and the like of the object around the target device relative to the target device, which is not limited in this application. It should be noted that it may be difficult to detect objects far from the target device. Therefore, the detected position information can better reflect distribution of objects close to the target device.

In step 102, image information collected by the target device is acquired.

In this embodiment, the target device may be further provided with an image collection apparatus (for example, a camera or a video camera). The image collection apparatus may be used to collect image information of a surrounding environment of the target device. The image information includes not only images of nearby objects around the target device, but also images of distant objects around the target device. Therefore, compared with the position information, the image information can better reflect distribution of objects far from the target device.

In step 103, initial data is determined based on the position information, the initial data including a plurality of sets of available values of a motion parameter.

In this embodiment, the initial data may be determined based on the position information of the object around the target device relative to the target device, and the initial data may include at least the plurality of sets of available values of the motion parameter. For example, the motion parameter may include a linear velocity and an angular velocity, and each of the plurality of sets of available values may include an alternative linear velocity value and an alternative angular velocity value. Each of the plurality of sets of available values of the motion parameter may be used to control motion of the target device to enable the target device to avoid detectable objects around the target device when the target device moves.

Specifically, the initial data may be determined by using any proper path planning algorithm according to the position information. For example, the plurality of sets of available values may be determined by using a probabilistic roadmap method (PRM) algorithm, or the plurality of sets of available values may be determined by using a rapidly exploring random tree (RRT) algorithm. Optionally, the plurality of sets of available values may also be determined by using a dynamic window approach (DWA) algorithm. Results obtained are more accurate when the plurality of sets of available values are determined by using the DWA algorithm. Certainly, any other path planning algorithms known in the art and likely to emerge in the future are all applicable to this application, which is not limited in this application.

In step 104, a target value of a current motion parameter for controlling motion of the target device is selected from the plurality of sets of available values based on the image information.

In this embodiment, the motion of the target device can be controlled according to each of the plurality of sets of available values of the motion parameter, and the target device can avoid detectable objects around the target device when the target device moves; however, paths generated when the motion of the target device is controlled by using different available values are different. Therefore, a set of target values enabling a travel path of the target device to be more optimized need to be selected from the plurality of sets of available values to serve as parameter values currently for controlling the motion of the target device.

In this embodiment, a set of target values may be selected from the available values based on the collected image information. Specifically, the motion parameter may include the linear velocity and the angular velocity, and the target value may include a target linear velocity value and a target angular velocity value. The target linear velocity value and the target angular velocity value may be expected values of a current linear velocity value and a current angular velocity value. Control data for controlling the motion of the target device (for example, traction on the target device or the direction of traction on the target device) may be determined according to currently detected instantaneous linear velocity and instantaneous angular velocity of the target device in combination with a target linear velocity and a target angular velocity.

In an implementation, weights for each of the plurality of sets of available values may be determined, the weights for each of the plurality of sets of available values are modified based on the image information, and a set of target values are selected from the plurality of sets of available values according to the modified weights for each of the plurality of sets of available values.

In another implementation, obstacle feature vectors may be extracted according to the available values of the motion parameter and the image information, and the obstacle feature vectors are input into a pretrained convolutional neural network to acquire a result output by the convolutional neural network as the target value of the motion parameter.

It may be understood that the target value may also be selected from the available values in other manners, and a specific manner of selecting the target value is not limited in this application.

It should be noted that, although the operations of the method according to this application are described in a particular order in the embodiment of FIG. 1, this does not require or imply that the operations need to be performed in that particular order, or that all of the operations shown need to be performed to achieve an expected result. Rather, the execution order of the steps depicted in the flowchart may be changed. For example, step 102 may be performed before step 101, performed between step 101 and step 103, performed after step 103, performed simultaneously with step 101, or performed simultaneously with step 103. Additionally or alternatively, some steps may be omitted, a plurality of steps may be combined into one step, and/or one step may be decomposed into a plurality of steps.

According to the method for controlling device motion provided in the above embodiment of this application, position information of an object around a target device relative to the target device is detected; image information collected is acquired; initial data is determined based on the position information, the initial data including a plurality of sets of available values; and a target value of a current motion parameter for controlling motion of the target device is selected from the plurality of sets of available values based on the image information. The available values obtained according to the position information can accurately make the target device avoid nearby objects around the target device, and the collected image information can accurately reflect distribution of distant obstacles around the target device. The target value is selected from the available values in combination with the image information, so that obstacles close to and far from the target device can be fully considered, and the target device can be controlled to travel through a more optimized path, thereby improving the smoothness of the travel path and optimizing the path.

As shown in FIG. 2, FIG. 2 illustrates a flowchart of another method for controlling device motion according to an exemplary embodiment of this application. A process of selecting a target parameter is described in this embodiment. The method is applicable to an electronic device and includes the following steps.

In step 201, position information of an object around a target device relative to the target device is detected.

In step 202, image information collected by the target device is acquired.

In step 203, initial data is determined based on the position information, the initial data including a plurality of sets of available values of a motion parameter and weights for each of the plurality of sets of available values.

In step 204, the weights for each of the plurality of sets of available values are modified based on the image information.

In this embodiment, in addition to the plurality of sets of available values, the initial data may further include the weights for each of the plurality of sets of available values. Optionally, the plurality of sets of available values and the weights for each of the plurality of sets of available values may be acquired by using a DWA algorithm, the plurality of sets of available values and the weights for each of the plurality of sets of available values may also be acquired by using a PRM algorithm, and so on. The weights for each of the plurality of sets of available values are weights that can reflect a degree to which a travel path is optimized by using the set of the plurality of sets of available values; however, only distribution of detectable nearby objects is considered when the weights are obtained. Because image data collected by the target device can further reflect distribution of distant objects around the target device, the weights for each of the plurality of sets of available values may be modified based on the image information. Accordingly, distribution of the distant objects is further considered in the modification to the weights for each of the plurality of sets of available values.

Specifically, modification data corresponding to each of the plurality of sets of available values may be determined based on the image information, and the weights for each of the plurality of sets of available values are modified according to the modification data corresponding to each of the plurality of sets of available values. It may be understood that the weights for each of the plurality of sets of available values may also be modified in other manners, which is not limited in this application.

In step 205, a set of target values are selected from the plurality of sets of available values according to the modified weights for each of the plurality of sets of available values.

In this embodiment, an available value with a maximum modified weight may be selected as the target value.

It should be noted that steps the same as those in the embodiment of FIG. 1 are not described in detail in the embodiment of FIG. 2, and refer to the embodiment of FIG. 1 for related content.

According to the method for controlling device motion provided in the above embodiment of this application, position information of an object around a target device relative to the target device is detected; image information collected by the target device is acquired; initial data is determined based on the position information, the initial data including a plurality of sets of available values of a motion parameter and weights for each of the plurality of sets of available values; the weights for each of the plurality of sets of available values are modified based on the image information; and a set of target values are selected from the plurality of sets of available values according to the modified weights for each of the plurality of sets of available values. Because only distribution of detectable nearby objects is considered when the weights for each of the plurality of sets of available values are obtained based on the position information, distribution of distant objects is further considered after the weights for each of the plurality of sets of available values are modified based on the image information. This helps to control the target device to travel through a more optimized path, thereby further improving the smoothness of the travel path, and helping to optimize the path.

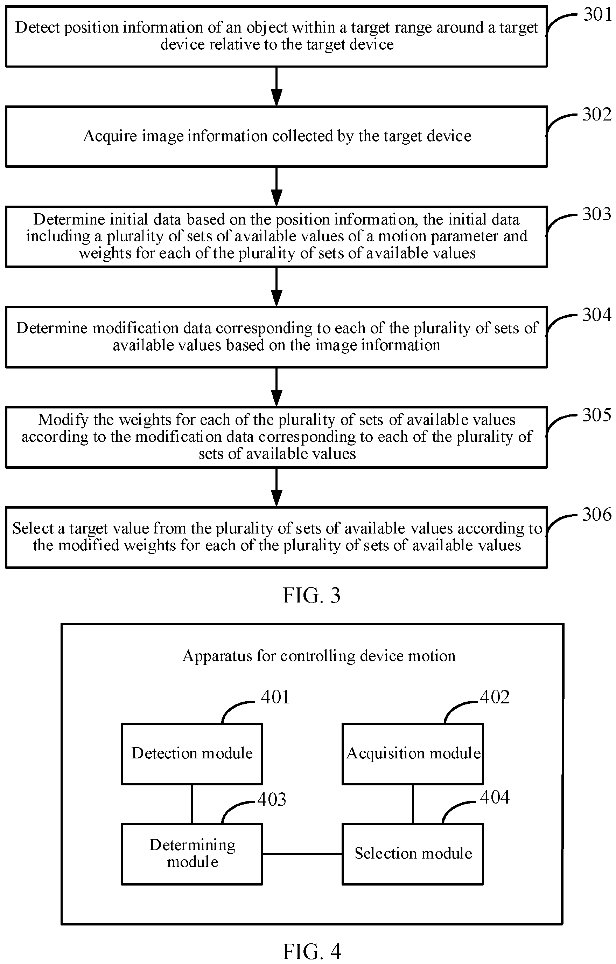

As shown in FIG. 3, FIG. 3 illustrates a flowchart of another method for controlling device motion according to an exemplary embodiment of this application. A process of modifying weights for each of the plurality of sets of available values is described in this embodiment. The method is applicable to an electronic device and includes the following steps.

In step 301, position information of an object within a target range around a target device relative to the target device is detected.

In step 302, image information collected by the target device is acquired.

In step 303, initial data is determined based on the position information, the initial data including a plurality of sets of available values of a motion parameter and weights for each of the plurality of sets of available values.

In step 304, modification data corresponding to each of the plurality of sets of available values is determined based on the image information.

In this embodiment, the modification data is used to modify the weights for the available values. Each of the plurality of sets of available values corresponds to a set of modification data, and the weights for each of the plurality of sets of available values may be modified by using the modification data corresponding to the set of available values. For example, the modification data corresponding to each of the plurality of sets of available values may be determined in the following manner: inputting the collected image information into a pre-trained target convolutional neural network, acquiring a target angle output by the target convolutional neural network, and determining the modification data corresponding to each of the plurality of sets of available values based on the target angle.

The target angle is an expected angle for current motion of the target device. If the target device moves according to the expected angle, the target device can not only avoid objects but also travel on a better path. The target convolutional neural network is a pre-trained convolutional neural network. Sample data may be precollected, and the target convolutional neural network is obtained by training based on the sample data.

Specifically, in a training stage, first, the target device may be provided with a plurality of image collection devices (for example, cameras, or video cameras), so that one of the image collection devices faces a position directly in front of the target device, and others of the image collection devices form different angles (for example, 10°, 20°, or 30°) with the position directly in front. The position directly in front of the target device is set to an expected direction, and an angle formed with the expected direction is set to an expected angle. Therefore, the expected angles corresponding to the image collection devices vary.

Then, the target device is manually controlled to move on a relatively smooth path in a designated field and avoid surrounding obstacles. Meanwhile, the image information may be collected in real time by using the plurality of image collection devices. The collected image information is associatively stored with the expected angle corresponding to the collection device that collects the image information, so as to obtain sample data.

Finally, the collected image information is input into a convolutional neural network to be trained, an angle output by the convolutional neural network to be trained is compared with the expected angle corresponding to the image information, and parameters of the convolutional neural network are constantly adjusted based on a comparison result, until a similarity between the angle output by the convolutional neural network to be trained and the expected angle corresponding to the image data meets a preset condition. The convolutional neural network with the adjusted parameters is used as the target convolutional neural network.

In this embodiment, the modification data corresponding to each of the plurality of sets of available values may be determined based on the target angle.

For example, a normal distribution function with the target angle as an expected value may be generated, and the modification data corresponding to each of the plurality of sets of available values is determined according to the normal distribution function.

Specifically, first, the normal distribution function below may be generated:

$$f(x) = \frac{1}{\sqrt{2\pi}\sigma} \cdot e^{-\frac{(x-\mu)^2}{2\sigma^2}}$$

The mathematical expected value μ may be the target angle, and the standard deviation σ may be an empirical value. Any proper value may be used as the standard deviation. After a value of a random variable x is determined, a probability density value corresponding to the random variable x may be determined according to the normal distribution function.

Then, alternative angular velocities included in each of the plurality of sets of available values may be taken out and multiplied by a preset duration respectively to obtain a plurality of values of the random variable x of the normal distribution function. A corresponding probability density value obtained by substituting each of the values into the normal distribution function serves as the modification data corresponding to each of the plurality of sets of available values. The preset duration may be an empirical value or any proper value, for example, 1 second (s), 2s, or the like. A specific value of the preset duration is not limited in this application.

In step 305, the weights for each of the plurality of sets of available values are modified according to the modification data corresponding to each of the plurality of sets of available values.

In this embodiment, the weights for each of the plurality of sets of available values may be modified according to the modification data corresponding to each of the plurality of sets of available values. Specifically, the modification data corresponding to each of the plurality of sets of available values may be multiplied by the weights for the set of the plurality of sets of available values to obtain modified weights for each of the plurality of sets of available values.

In step 306, a set of target values are selected from the plurality of sets of available values according to the modified weights for each of the plurality of sets of available values.

It should be noted that same steps in the embodiments of FIG. 1 and FIG. 2 are not described in detail in the embodiment of FIG. 3, and refer to the embodiments of FIG. 1 and FIG. 2 for related content.

According to the method for controlling device motion provided in the above embodiment of this application, position information of an object around a target device relative to the target device is detected; image information collected is acquired; initial data is determined based on the position information, the initial data including a plurality of sets of available values and weights for each of the plurality of sets of available values; modification data corresponding to each of the plurality of sets of available values is determined based on the image information; the weights for each of the plurality of sets of available values are modified according to the modification data corresponding to each of the plurality of sets of available values; and a set of target values are selected from the plurality of sets of available values according to the modified weights for each of the plurality of sets of available values. In this embodiment, the modification data corresponding to each of the plurality of sets of available values is determined based on the image information, and the weights for each of the plurality of sets of available values are modified according to the modification data corresponding to each of the plurality of sets of available values, thereby further controlling the target device to more accurately select an optimized path to travel.

Corresponding to the embodiment of the method for controlling device motion, this application further provides an embodiment of an apparatus for controlling device motion.

As shown in FIG. 4, FIG. 4 illustrates a block diagram of an apparatus for controlling device motion according to an exemplary embodiment of this application. The apparatus may include: a detection module 401, an acquisition module 402, a determining module 403, and a selection module 404.

The detection module 401 is configured to detect position information of an object within a target range around a target device relative to the target device.

The acquisition module 402 is configured to acquire image information collected by the target device.

The determining module 403 is configured to determine initial data based on the position information, the initial data including a plurality of sets of available values of a motion parameter.

The selection module 404 is configured to select, from the plurality of sets of available values based on the image information, a target value of a current motion parameter for controlling motion of the target device.

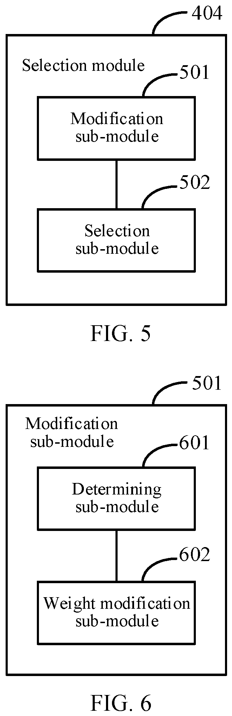

As shown in FIG. 5, FIG. 5 illustrates a block diagram of another apparatus for controlling device motion according to an exemplary embodiment of this application. This embodiment is based on the embodiment shown in FIG. 4, and the selection module 404 may include: a modification sub-module 501 and a selection sub-module 502.

The modification sub-module 501 is configured to modify the weights for each of the plurality of sets of available values based on the image information.

The selection sub-module 502 is configured to select a set of target values from the plurality of sets of available values according to the modified weights for each of the plurality of sets of available values.

The initial data further includes the weights for each of the plurality of sets of available values.

As shown in FIG. 6, FIG. 6 illustrates a block diagram of another apparatus for controlling device motion according to an exemplary embodiment of this application. This embodiment is based on the embodiment shown in FIG. 5, and the modification sub-module 501 may include: a determining sub-module 601 and a weight modification sub-module 602.

The determining sub-module 601 is configured to determine modification data corresponding to each of the plurality of sets of available values based on the image information.

The weight modification sub-module 602 is configured to modify the weights for each of the plurality of sets of available values according to the modification data.

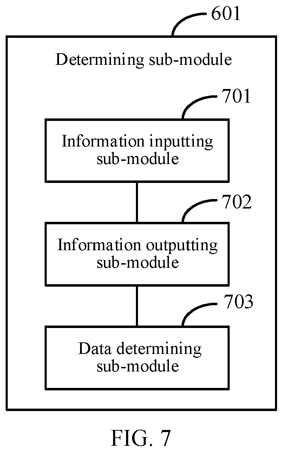

As shown in FIG. 7, FIG. 7 illustrates a block diagram of another apparatus for controlling device motion according to an exemplary embodiment of this application. This embodiment is based on the embodiment shown in FIG. 6, and the determining sub-module 601 may include: an information inputting sub-module 701, an information outputting sub-module 702, and a data determining sub-module 703.

The information inputting sub-module 701 is configured to input the image information into a pre-trained target convolutional neural network.

The information outputting sub-module 702 is configured to acquire a target angle output by the target convolutional neural network.

The data determining sub-module 703 is configured to determine the modification data corresponding to each of the plurality of sets of available values based on the target angle.

In some optional implementations, the data determining sub-module 703 is configured to: generate a normal distribution function with the target angle as an expected value, and determine the modification data corresponding to each of the plurality of sets of available values according to the normal distribution function.

In some other optional implementations, the data determining sub-module 703 determines the modification data corresponding to each of the plurality of sets of available values according to the normal distribution function in the following manner: determining a product of an alternative angular velocity and a preset duration in each of the plurality of sets of available values as a plurality of values of a random variable of the normal distribution function; and acquiring a probability density value obtained by substituting each of the values into the normal distribution function as the modification data corresponding to each of the plurality of sets of available values. The motion parameter includes a linear velocity and an angular velocity, and the available values include alternative linear velocities and alternative angular velocities.

In some other optional implementations, the determining module 403 is configured to: determine the initial data by using a DWA algorithm according to the position information.

It should be understood that the apparatus may be preset in an electronic device or loaded into an electronic device in a manner such as downloading. The corresponding modules in the apparatus may coordinate with modules in the electronic device to implement the solution for controlling device motion.

Since the apparatus embodiments substantially correspond to the method embodiments, refer to partial descriptions of the method embodiments for a related part. The apparatus embodiments described above are merely illustrative. The units described as separate members may be or not be physically separated, and the members displayed as units may be or not be physical units, and may be located in one place, or may be distributed to a plurality of network units. Some or all of the modules may be selected according to actual requirements to achieve the objectives of the solutions in this application. A person of ordinary skill in the art may understand and carry out them without creative work.

An embodiment of this application further provides a computer-readable storage medium. The storage medium stores a computer program, and the computer program may be used to implement the method for controlling device motion according to any one of the embodiments in FIG. 1 to FIG. 3.

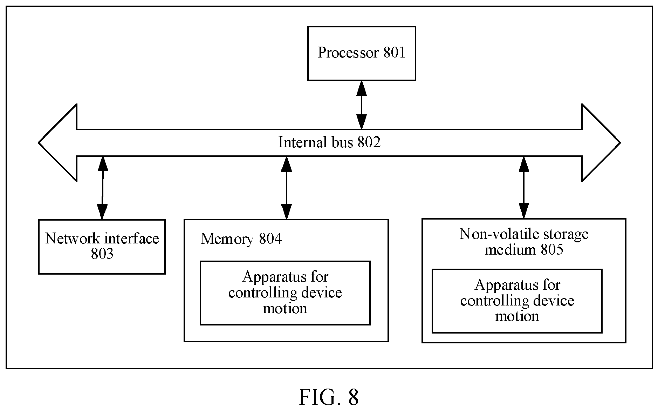

Corresponding to the method for controlling device motion, an embodiment of this application further provides a schematic structural diagram of an electronic device according to an exemplary embodiment of this application, as shown in FIG. 8. Referring to FIG. 8, at the hardware level, the electronic device includes a processor 801, an internal bus 802, a network interface 803, a memory 804, and a non-volatile storage medium 805, and certainly, may further include hardware required by other services. The processor 801 reads a corresponding computer program from the non-volatile storage medium 805 to the memory 804 and then runs the computer program, forming an apparatus for controlling device motion at the logic level. Certainly, in addition to the software implementation, this application does not exclude other implementations, for example, logical devices or a combination of hardware and software. That is, the following processing is performed by, but not limited to, each logical unit, and may also be performed by hardware or logical devices.

A person skilled in the art easily thinks of other implementation solutions of this application after considering the specification and practicing the application disclosed here. This application is intended to cover any variations, uses, or adaptive changes of this application. The variations, uses, or adaptive changes follow the general principles of this application and include common knowledge or common technical means in the art that are not disclosed in this application. The specification and the embodiments are considered as exemplary only, and the true scope and spirit of this application are indicated by the claims below.

It should be understood that this application is not limited to the accurate structure described above and shown in the accompanying drawings, and various modifications and changes can be made without departing from the scope thereof. The scope of this application is limited only by the appended claims.

**Claims**

1.  A method for controlling device motion, comprising:

    detecting position information of an object within a target range around a target device relative to the target device;
    acquiring image information collected by the target device;
    determining initial data based on the position information, the initial data comprising a plurality of sets of available values of a motion parameter; and
    selecting, from the plurality of sets of available values based on the image information, a target value of the motion parameter for currently controlling motion of the target device.

2.  The method according to claim 1, wherein the initial data further comprises weights for each of the plurality of sets of available values; and
    the selecting, from the plurality of sets of available values based on the image information, a target value of the motion parameter for currently controlling motion of the target device comprises:

    modifying the weights for each of the plurality of sets of available values based on the image information; and
    selecting the target value from the plurality of sets of available values according to the modified weights for each of the plurality of sets of available values.

3.  The method according to claim 2, wherein the modifying the weights for each of the plurality of sets of available values based on the image information comprises:

    determining modification data corresponding to each of the plurality of sets of available values based on the image information; and
    modifying the weights for each of the plurality of sets of available values according to the modification data.

4.  The method according to claim 3, wherein the determining modification data corresponding to each of the plurality of sets of available values based on the image information comprises:

    inputting the image information into a pre-trained target convolutional neural network;
    acquiring a target angle output by the target convolutional neural network; and
    determining the modification data corresponding to each of the plurality of sets of available values based on the target angle.

5.  The method according to claim 4, wherein the determining the modification data corresponding to each of the plurality of sets of available values based on the target angle comprises:

    generating a normal distribution function with the target angle as an expected value; and
    determining the modification data corresponding to each of the plurality of sets of available values according to the normal distribution function.

6.  The method according to claim 5, wherein the motion parameter comprises a linear velocity and an angular velocity; and
    the determining the modification data corresponding to each of the plurality of sets of available values according to the normal distribution function comprises:

    determining a product of a preset duration and an available angular velocity in each of the plurality of sets of available values as a plurality of values of a random variable x of the normal distribution function; and
    acquiring a probability density value obtained by substituting each of the values into the normal distribution function as the modification data corresponding to each of the plurality of sets of available values.

7.  An apparatus for controlling device motion, wherein the apparatus comprises:

    a detection module, configured to detect position information of an object within a target range around a target device relative to the target device;
    an acquisition module, configured to acquire image information collected by the target device;
    a determining module, configured to determine initial data based on the position information, the initial data comprising a plurality of sets of available values of a motion parameter; and
    a selection module, configured to select, from the plurality of sets of available values based on the image information, a target value of the motion parameter for currently controlling motion of the target device.

8. The apparatus according to claim 7, wherein the initial data further comprises weights for each of the plurality of sets of available values; and the selection module comprises:

a determining sub-module, configured to modify the weights for each of the plurality of sets of available values based on the image information; and a selection sub-module, configured to select the target value from the plurality of sets of available values according to the modified weights for each of the plurality of sets of available values.

9. A computer-readable storage medium, wherein the storage medium stores a computer program, and the computer program, when executed by a processor, implements the method for controlling device motion according to any one of claims 1 to 6.

10. An electronic device, comprising a storage medium, a processor, and a computer program stored in the storage medium and runnable on the processor, wherein when the processor executes the program, the method for controlling device motion according to any one of claims 1 to 6 is implemented.

Detect position information of an object within a target range around a target device relative to the target device
—101

Acquire image information collected by the target device
—102

Determine initial data based on the position information, the initial data including a plurality of sets of available values of a motion parameter
—103

Select, from the plurality of sets of available values based on the image information, a target value of the motion parameter for currently controlling motion of the target device
—104

FIG. 1

Detect position information of an object around a target device relative to the target device
—201

Acquire image information collected by the target device
—202

Determine initial data based on the position information, the initial data including a plurality of sets of available values of a motion parameter and weights for each of the plurality of sets of available values
—203

Modify the weights for each of the plurality of sets of available values based on the image information
—204

Select a target value from the plurality of sets of available values according to the modified weights for each of the plurality of sets of available values
—205

FIG. 2

Detect position information of an object within a target range around a target device relative to the target device  ⌐ 301

Acquire image information collected by the target device  ⌐ 302

Determine initial data based on the position information, the initial data including a plurality of sets of available values of a motion parameter and weights for each of the plurality of sets of available values  ⌐ 303

Determine modification data corresponding to each of the plurality of sets of available values based on the image information  ⌐ 304

Modify the weights for each of the plurality of sets of available values according to the modification data corresponding to each of the plurality of sets of available values  ⌐ 305

Select a target value from the plurality of sets of available values according to the modified weights for each of the plurality of sets of available values  ⌐ 306

FIG. 3

Apparatus for controlling device motion

⌐ 401

Detection module

⌐ 402

Acquisition module

⌐ 403

Determining module

⌐ 404

Selection module

FIG. 4

404

Selection module    501

Modification
sub-module

502

Selection
sub-module

FIG. 5

501

Modification
sub-module    601

Determining
sub-module

602

Weight modification
sub-module

FIG. 6

601

Determining sub-module

701

Information inputting
sub-module

702

Information outputting
sub-module

703

Data determining
sub-module

FIG. 7

Processor 801

Internal bus 802

Network interface 803

Memory 804

Apparatus for controlling device motion

Non-volatile storage medium 805

Apparatus for controlling device motion

FIG. 8

<div align="center">**INTERNATIONAL SEARCH REPORT**</div>

| International application No. |
| --- |
| **PCT/CN2018/114999** |

**A. CLASSIFICATION OF SUBJECT MATTER**

G05D 1/02(2006.01)i

According to International Patent Classification (IPC) or to both national classification and IPC

**B. FIELDS SEARCHED**

Minimum documentation searched (classification system followed by classification symbols)

G05D

Documentation searched other than minimum documentation to the extent that such documents are included in the fields searched

Electronic data base consulted during the international search (name of data base and, where practicable, search terms used)

CNPAT, EPODOC, WPI, CNKI: 图像, 视频, 图片, 图象, 位置, 障碍, 优化, 修正, OPTIMIZ+, MODIFY, CORRECT, POSITION, OBSTACLE, CAMERA, IMAGE, PICTURE, VIDEO

**C. DOCUMENTS CONSIDERED TO BE RELEVANT**

| Category* | Citation of document, with indication, where appropriate, of the relevant passages | Relevant to claim No. |
| --- | --- | --- |
| PX | CN 108121347 A (BEIJING THREE FAST ONLINE SCIENCE AND TECHNOLOGY CO., LTD.) 05 June 2018 (2018-06-05) claims 1-10 | 1-10 |
| Y | CN 106598054 A (UDITECH CO., LTD.) 26 April 2017 (2017-04-26) claims 1-5, description, paragraphs [0028]-[0062], and figures 1-3 | 1-10 |
| Y | CN 106767823 A (ZHIYIXING TECH (WUHAN) CO., LTD.) 31 May 2017 (2017-05-31) claim 1 | 1-10 |
| A | CN 105739495 A (DALIAN ROILAND TECHNOLOGY CO., LTD.) 06 July 2016 (2016-07-06) entire document | 1-10 |
| A | CN 106020201 A (GUANGDONG AOXUN INTELLIGENT EQUIPMENT TECH CO., LTD.) 12 October 2016 (2016-10-12) entire document | 1-10 |
| A | CN 103576680 A (CHINA INSTITUTE OF ATOMIC ENERGY) 12 February 2014 (2014-02-12) entire document | 1-10 |

☑ Further documents are listed in the continuation of Box C. ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **17 January 2019** | **13 February 2019** |

| Name and mailing address of the ISA/CN | Authorized officer |
| --- | --- |
| **National Intellectual Property Administration, PRC (ISA/CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2018/114999** |

**C.     DOCUMENTS CONSIDERED TO BE RELEVANT**

| Category* | Citation of document, with indication, where appropriate, of the relevant passages | Relevant to claim No. |
| --- | --- | --- |
| A | US 2015292891 A1 (NISSAN NORTH AMERICA INC.) 15 October 2015 (2015-10-15)<br>       entire document | 1-10 |
| A | US 2016209846 A1 (THE REGENTS OF THE UNIVERSITY OF MICHIGAN) 21 July 2016<br>(2016-07-21)<br>       entire document | 1-10 |

Form PCT/ISA/210 (second sheet) (January 2015)

**INTERNATIONAL SEARCH REPORT**
**Information on patent family members**

International application No.

**PCT/CN2018/114999**

| Patent document cited in search report | | | Publication date (day/month/year) | Patent family member(s) | | | Publication date (day/month/year) |
|---|---|---|---|---|---|---|---|
| CN | 108121347 | A | 05 June 2018 | None | | | |
| CN | 106598054 | A | 26 April 2017 | None | | | |
| CN | 106767823 | A | 31 May 2017 | None | | | |
| CN | 105739495 | A | 06 July 2016 | None | | | |
| CN | 106020201 | A | 12 October 2016 | None | | | |
| CN | 103576680 | A | 12 February 2014 | CN | 103576680 | B | 14 September 2016 |
| US | 2015292891 | A1 | 15 October 2015 | US | 9151626 | B1 | 06 October 2015 |
| US | 2016209846 | A1 | 21 July 2016 | US | 9989969 | B2 | 05 June 2018 |
| | | | | EP | 3248029 | A1 | 29 November 2017 |
| | | | | WO | 2016118499 | A1 | 28 July 2016 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201711471549